# EUROPEAN PATENT SPECIFICATION

(11) **EP 1 843 657 B1**
(45) Date of publication and mention of the grant of the patent: **13.08.2014**
(21) Application number: 05761240.0
(22) Date of filing: 19.07.2005
(51) Int. Cl.: A01J 27/00, A23C 19/14, A23L 1/00

(54) **METHOD AND DEVICE FOR IMPRESSING OF RELIEF IMAGES ON FOODSTUFFS**
VERFAHREN UND GERÄT ZUM AUFDRUCK VON RELIEFBILDERN AUF LEBENSMITTELN
PROCEDE ET DISPOSITIF D'IMPRESSION D'IMAGES EN RELIEF SUR DES ALIMENTS

(30) Priority: 04.02.2005 BG 10903605
(43) Date of publication of application: 17.10.2007
(73) Proprietor: Trendafilov, Yordan Dimitrov, 8800 Sliven (BG)
(72) Inventor: Trendafilov, Yordan Dimitrov, 8800 Sliven (BG)
(74) Representative: Manev, Kostadin Chanev
(86) International application number: PCT/BG2005/000006
(87) International publication number: WO 2006/081638

(56) References cited:
- EP-A- 0 258 632
- CH-A5- 662 358
- DE-A1- 3 836 821
- DE-U1- 29 710 941
- FR-A- 2 694 113
- GB-A- 467 759
- NL-C- 59 023
- US-A- 1 856 530

## Description

### I. FIELD OF APPLICATION

The invention refers to a method for impressing of relief images on foodstuffs, which is implemented in durable marking and expressing of the trade mark of the manufacturer or vendor for the purpose of identification and distinguishment by the users in the market of produced and traded goods, as well as prevention of eventual attempts to falsify these goods.

### II. PRECEDING STATE OF THE TECHNICS

A device is know for impressing relief images that contain letters of metal which are used for marking by pressure on a cheese surface. (1)

A method is known for impressing of relief images on textile material by which convex embroidery is applied that is of 3D type and is formed by putting a layer of elastic material on cloth which is being embroidered. After embroidering being finished the unnecessary elastic material, except that from the embroidered section, is removed. (2)

A method is known for impressing of relief images on textile material by which one or more layers of water-dissolving gelatine sheet are put on it. The embroidery is applied on the gelatine sheet and cloth by a preliminary designed pattern, as the embroidered cloth together with the gelatine sheet imposed on it is dipped in water until the gelatine sheet is set apart the cloth and after that the embroidered cloth, by which the gelatin sheet was set apart, is dried. (3)

### III. TECHNICAL ESSENCE AND ADVANTAGES

The task of the invention is to create a method for impressing of relief images on foodstuffs, by which to make permanent marking on damp solid and semi-solid food under production conditions, so that the marking to be carried out on the surface of bulk products, as well as to create a device for the realization of the method, which has to be simple, allows imposing of relief images on any bulk and elastic foodstuffs.

In compliance with the invention, this task is solved by a method of impressing of relief images on foodstuffs, where the selected dosed volume of foodstuffs is placed on a strainer, on which convex relief elements are made by embroidery of preliminarily designed pattern. After the removal of the initial moisture from the foodstuff and obtaing a satisfactory durable hardening of its surface, the strainer is taken away, thus on the surface of each piece of the foodstuffs a durable impression of concave relief elements is formed, which are a mirror image of the convex relief elements, embroidered on the strainer.

Advantages of the method for impressing of relief images on foodstuffs are that it can be applied to any volumetric and elastic foodstuffs and more specially on milk products, such as dry and brined cheeses, as well as yellow cheese - solid, semi-solid and soft, and provides protection in the market of the marked firms' products against inconsistent presentation and advertising of similar products of other firms and producers; the protection of the products comprises the whole trade network, from the producer, the wholesale vendor, the retail vendor, and the end customer - the user, by affirming the qualities of the product and the prestige of the producer ; creates prerequisites for positive changes, concerning the affirmation of the qualities of the produced goods in the milk processing production branch; the implementation of the method is made in parallel with keeping unchanged the normative technological production process.

### IV. DESCRIPTION OF THE FIGURES

The invention is explained in more details by the help of the exemplary preparation of the device for impressing of relief images on foodstuffs, illustrated in the figures, where:
In figure 1 a cloth of textile material is shown with large-net structure and embroidered relief images on it, and
In figure 2 are shown exemplary elements for preparation of relief images - letters, ciphers and various geometric figures on the strainer.

### V. EXEMPLARY EXECUTION OF THE INVENTION

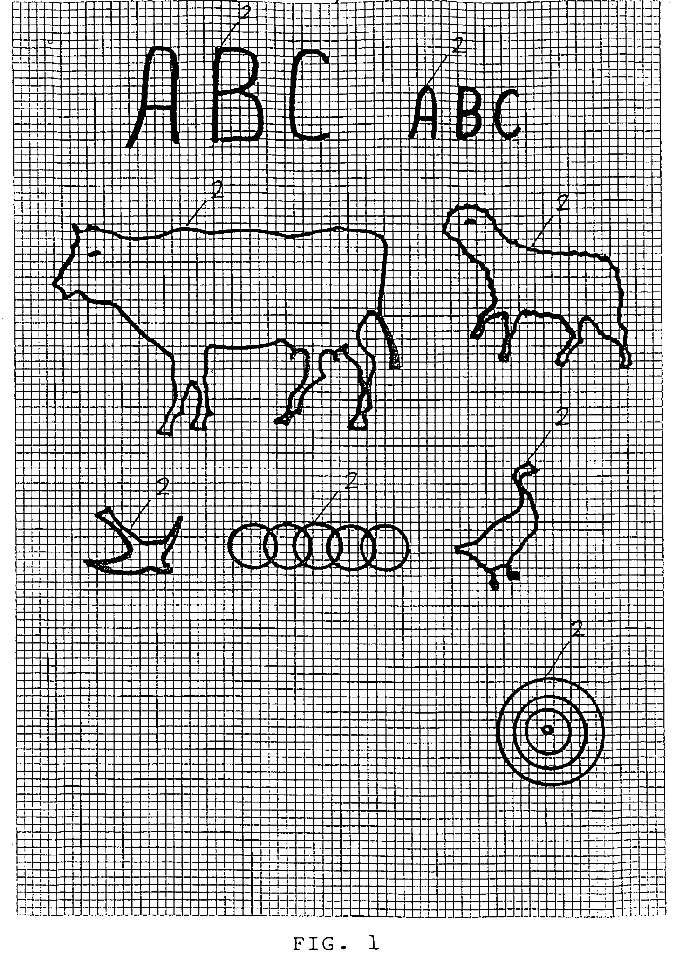

As illustrated in figure 1, the device for impressing of relief images on foodstuffs, consists of a strainer 1, which has loose large-net structure, on which are formed convex relief elements 2, prepared my machine embroidering of preliminary selected combinations of letters, ciphers and/or figures.

The device for applying relief images on foodstuff is the strainer I itself by which cheese stuff is strained off and pressed during the production process. On strainer 1 by embroidering convex relief images consisting of figures and inscriptions of preliminary selected image.

The application of relief images on any voluminous foodstuff and elastic dairy products, in fact, preserves the existing technological process for cheese and yellow cheese production as it is needful minimum costs for its implementation in the production conditions.

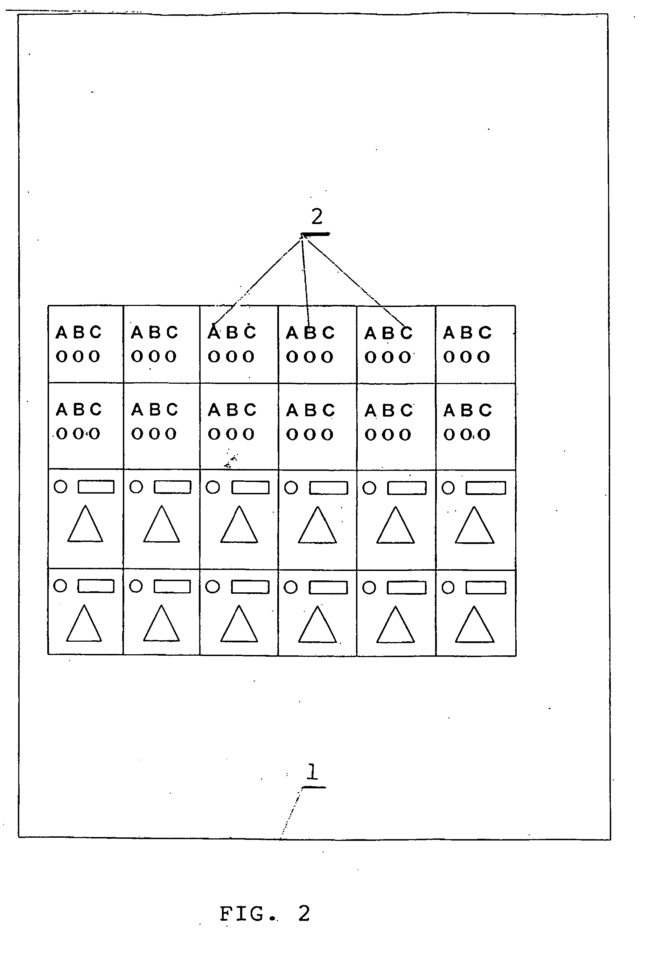

The convex relief elements 2 are prepared by machine embroidering and are put at these places on the strainer 1, which are placed on the bottom of a vessel, where the milk is poured for producing of the respective foodstuff - the cheese Besides that, the whole standard technology for production of cheese remains unchanged. The only change consists in the used strainer, made of strainer 1 with loose large-net structure, on which are embroidered specific convex relief elements 2, which represent a combination of chosen letters, ciphers and/or various figures, illustrated in figure 2, which are selected in advance by the producer or are ordered by the vendor of the foodstuff. In such cases, usually on the strainer 1 the approved and registered trade mark of the producer or the vendor or any other characteristic image is expressed respectively, by which a durable relief marking is realized on the surface of the produced cheese. In this way, the produced goods are surely identified among the producers and the consumers in the market and simultaneously with this acquires a real protection against attempts for falsifying.

The machine embroidered relief elements are placed on the surface of the strainer in such an order that after the respective technological operations of straining off and pressing of the milk product is over, the relief elements to occur under each formed piece of cheese after it is cut into pieces. Thus, when the cheese is ready technologically for cutting, under each cut standard formed piece, whose dimensions usually are 11 x 11 x 10 cm convex relief elements 2 are located on the strainer 1. This convex relief element 2 impresses a durable image on the surface of the cheese piece, on which a concave relief element 3 is formed, which is a mirror image of the embroidered convex relief element 2 on the strainer 1. The concave relief element 3 is formed as a concave relief image on each piece of cheese during the pressing of the placed milk material by putting on it gradually increasing weights up to 1 kg for 1 kg cheese. In this way, the inially produced semi-liquid milk product after removing the damp little by little from it, in the end of the technological process acquires stiff semi-solid and slightly elastic structure, which preserves its acquired shape and volume and has an impression of concave relief elements 3, obtained respectively as a mirror image of the embroidered convex relief element 2 of the strainer 1.

The device for impressing of relief images, depending on the preferences, can be made with various situation and frequency of the formed images, so that to mark durably the pieces of cheese with different size, for example 0,5 kg, 1,9\0 kg, 2,0 kg and according to their size the convex relief elements 2 are worked in the needed quantity and of respective various distances between them on the strainer 1. Except for this, the convex relief elements 2 can be embroidered with different height, which varies in the limits from 0,5 mm to 5.0 mm.

The impressing by printing of the permanent concave image on the surface of yellow cheese in the process of its production is analogous. To this milk product the specific technological operations are applied for its production, that is why for the impressing of concave print on its surface it is necessary to use the moment of producing of just steamed yellow cheese, when it is soft and plastic and liable for impressing of concave images on its surface. In the case the same device is used for relief impression, according the invention, prepared as a strainer 1 with embroidered on it convex relief elements 2. The working plate is laid with the strainer 1, onto which the yellow cheese is put later for straining. Immediately after the steaming the hot yellow cheese is put together with the form onto the respective relief element of the strainer 1 and is left for straining, while under the action of its own weight a pressing takes place and impressing of the relief element on the surface of the yellow cheese. After the cooling, the yellow cheese acquires a stiff consistence, by keeping its external appearance with the durable impressed concave relief elements 3 on its surface, which have been transferred before that by the used device for relief impression in the technological process.

The device for relief impression can be made in different variants on the surface of the strainer, depending on the used forms under the production condition for producing yellow cheese, and the embroiled convex relief element 2 on the strainer, made as a strainer 1 can be made with height from 0,5 mm to 5,0 mm. The impressing of relief images on yellow cheese is applicable to the usage of other known technologies. For example, when using various forms of the yellow cheese, it is necessary to prepare a respective strainer, on which convex relief elements 2 are embroidered before that.

The proposed invention can be applied with the same success for relief superficial marking on other foodstuffs, which are produced in a similar manner.

### Used bibliography:

1.US Nº 1856530, publication from 03.05.1932.
2.JP Nº 02277869, class D 05 C 17/00, publication from 14.11.1990.
3.DE Nº 4343230, class D 05 C 17/00, publication from

## Claims

1. Method for impressing of relief images on foodstuffs, on whose surface a durable impression of relief image is made, **characterized by** this, that the chosen dosed volume of foodstuffs is placed on a strainer (1), on which by embroidery are made convex relief elements (2) with preliminarily determined frequency and situation, when after the removal of the initial moisture from the foodstuffs and producing of satisfactorily durable hardening of its surface the strainer (1) is taken off, then on the surface of each piece of the produced foodstuffs is formed a durable impression of concave relief elements (3), which are mirror images of the convex relief elements (2), embroidered on the strainer (1).

## Patentansprüche

1. Verfahren zum Einprägen von Reliefbildern auf Lebensmitteln, auf deren Fläche dauerhaft ein Reliefbild eingeprägt ist, für welches charakteristisch ist, dass das gewählte dosierte Volumen vom Lebensmittel in ein Drucksieb (1) gegeben wird, an welchem gewölbte Reliefelemente (2) mit vorläufig festgelegter Frequenz und Lage sind, wobei nach Beseitigung der Anfangsfeuchte von den Lebensmitteln und Entstehung von zufriedenstellender dauerhafter Härte auf ihrer Fläche, das Drucksieb (1) abgenommen wird, dann wird auf der Fläche von jedem erzeugten Lebensmittel ein dauerhafter Abdruck von eingeprägten Reliefelementen (3) gebildet, die spiegelbildlich die gewölbten Reliefelemente (2) vom Drucksieb (1) darstellen.

## Revendications

1. Méthode d'impression d'images à relief sur des produits alimentaires, sur la surface desquels est imprimée une image à relief durable, pour laquelle il est caractéristique que le volume dosé choisi du produit alimentaire est posé dans une presse (1), sur laquelle par broderie sont obtenus des éléments à relief saillants (2) d'une fréquence et disposition préalablement déterminés, étant donné qu'après l'élimination de l'humidité initiale des produits alimentaires et l'obtention d'une solidité permanente satisfaisante de leur surface, la presse (1) est enlevée, et après cela sur la superficie de chaque produit alimentaire est formée une emprunte durable d'éléments à relief concave (3), qui sont une image - miroir des éléments à relief convexe (2), obtenus sur la presse (1).
